# EUROPEAN PATENT SPECIFICATION

(11) **EP 4 269 077 B1**
(45) Date of publication and mention of the grant of the patent: **15.10.2025**
(21) Application number: 23168461.4
(22) Date of filing: 18.04.2023
(51) Int. Cl.: B29C 65/16, B29C 65/00, D06F 39/00, B29L 31/00, B29C 37/00, A47L 15/42

(54) **WELDING METHOD FOR HOUSEHOLD APPLIANCE, WELDED ASSEMBLY, APPEARANCE MEMBER, AND HOUSEHOLD APPLIANCE**
SCHWEISSVERFAHREN FÜR HAUSHALTSGERÄT, GESCHWEISSTE ANORDNUNG, SICHTELEMENT UND HAUSHALTSGERÄT
PROCÉDÉ DE SOUDAGE POUR APPAREIL ÉLECTROMÉNAGER, ENSEMBLE SOUDÉ, ÉLÉMENT D'ASPECT ET APPAREIL ÉLECTROMÉNAGER

(30) Priority: 26.04.2022 CN 202210448810
(43) Date of publication of application: 01.11.2023
(73) Proprietor: BSH Hausgeräte GmbH, 81739 München (DE)
(72) Inventor: Zhang, Wenxu, Nanjing, 210046 (CN); Cai, Shangwen, Nanjing, 210046 (CN)

(56) References cited:
- WO-A1-2007/000645
- DE-U1- 202004 021 738
- US-A1- 2020 170 480

## Description

The present invention relates to the field of household appliances, in particular to a welding method for a household appliance, a welded assembly for a household appliance, an appearance member for a household appliance, and a corresponding household appliance.

With the improvement of living standards, people have increasingly higher demands on the appearance of household appliances.

When an appearance region of a household appliance is manufactured, it is usually necessary to connect at least two different components together to form at least a portion of the appearance region of the household appliance.

In the prior art, snap-fit connection or adhesive bonding is usually used in such a connecting process, but neither the snap-fit connection nor the adhesive bonding is a permanent connection, that is, the two different components connected together by means of such process may age or even come off over time, resulting in failure of the connection.

On the other hand, people also do not want to see that there is a noticeable connection part (such as the aforementioned snap-fit connection or adhesive bonding part) in the appearance region of the household appliance during regular use of the household appliance, because such noticeable connection part would make a user think that the household appliance has a low-quality and cheap appearance.

Therefore, there is still a need for continuous improvement in the manufacturing technology of the appearance region of existing household appliances.

Utility model DE 20 2004 021738 U1 discloses a cover for an appliance housing, in particular a housing of a refrigerator.

Patent application publication US 2020/170480 A1 discloses a water-using household appliance.

Patent application publication WO 2007/000645 A1 discloses a door for a household appliance.

An object of the embodiments of the present invention is to provide an improved welding method for a household appliance, an improved welded assembly, an improved appearance member for a household appliance and an improved household appliance, so as to solve at least some of the problems in the prior art.

According to a first aspect of the present invention, the embodiments of the present invention provide a welding method for a household appliance, the welding method comprising at least:
step S100 of providing a first component having a light-transmitting portion;
step S200 of providing a second component having a light-absorbing portion;
step S300 of positioning the first component and the second component relative to each other such that the light-transmitting portion and the light-absorbing portion have an overlapping region; and
step S400 of directing a welding laser onto the light-absorbing portion through the light-transmitting portion in the overlapping region to form a welding portion between the light-transmitting portion and the light-absorbing portion, so that the first component and the second component are welded together to form a welded assembly, wherein the welded assembly forms a usage appearance region of the household appliance, with the welding portion being hidden in the usage appearance region.

In this way, on the one hand, compared with the snap-fit connection or adhesive bonding in the prior art, the welding connection allows the two connected components to have higher connection strength and be less prone to aging and detachment; on the other hand, the welding portion that connects the two components together is hidden in the usage appearance region of the household appliance, which not only achieves permanent connection of the two components, but also makes the welding portion that connects the two components together less visible to a user during regular use of the household appliance, so that the household appliance is durable and has a high-quality decorative appearance effect.

According to an optional embodiment of the present invention, the welding method comprises:
step S101 of providing a first base member composed of a light-transmitting substrate; and
step S 102 of carrying out partial process treatment (preferably by means of partial integrated in-mold injection molding) on the first base member to provide a functional layer (in particular an ink layer and/or a UV protective layer) so as to form a first component having a light-transmitting portion in the part that is not provided with the functional layer.

In this way, the first base member composed of the light-transmitting substrate is used, so that the welding method provided in the embodiment of the present invention is feasible, and thus the appearance member provided with a functional layer, which is not easily connected by laser welding, is connected by welding using the welding method provided in the embodiment of the present invention, thereby overcoming the problems, such as easy aging and detachment, of the appearance member provided with the functional layer caused by the snap-fit connection or adhesive bonding manner commonly used for an appearance member provided with a functional layer in the prior art.

According to an optional embodiment of the present invention, the welding method comprises:
step S201 of providing a second base member composed of a light-absorbing substrate; and
step S202 of carrying out partial electroplating treatment on the second base member to form the second component having the light-absorbing portion in the part that is not subjected to electroplating treatment.

In this way, the second base member composed of the light-absorbing substrate is used, so that the welding method provided in the embodiment of the present invention is feasible, and thus the electroplated appearance member, which is not easily connected by laser welding, is connected by welding using the welding method provided in the embodiment of the present invention, thereby overcoming the problems, such as easy aging and detachment, of the electroplated appearance member caused by the snap-fit connection or adhesive bonding manner commonly used for an electroplated appearance member in the prior art.

According to the present invention, the welding method comprises:
step S111 of providing a first base member composed of a light-transmitting substrate, wherein a surface of the first base member has a first welding section and a first treatment section;
step S112 of carrying out process treatment (preferably by means of integrated in-mold injection molding) on the first welding section and the first treatment section to provide a functional layer (in particular an ink layer and/or a UV protective layer) so as to form a first prefabricated member having a functional region in the first welding section and the first treatment section; and
step S113 of stripping the functional layer from the first welding section, preferably by means of laser-etching removal with a laser-etching laser, so as to form the first component having a light-transmitting portion in the first welding section; and/or
step S211 of providing the second base member composed of the light-absorbing substrate, wherein a surface of the second base member has a second welding section and a second treatment section;
step S212 of carrying out anti-plating treatment on the second welding section, preferably coating with an anti-plating layer, so as to form a second prefabricated member having an anti-plating region in the second welding section;
step S213 of electroplating the entirety of the second base member such that the surface of the second base member is coated with an electroplating layer except for the second welding section to form the second component having the light-absorbing portion in the second welding section.

In this way, i.e. step S111 of providing a first base member composed of a light-transmitting substrate, wherein a surface of the first base member has a first welding section and a first treatment section;
step S112 of carrying out process treatment (preferably by means of integrated in-mold injection molding) on the first welding section and the first treatment section to provide a functional layer (in particular an ink layer and/or a UV protective layer) so as to form a first prefabricated member having a functional region in the first welding section and the first treatment section; and
step S113 of stripping the functional layer from the first welding section, preferably by means of laser-etching removal with a laser-etching laser, so as to form the first component having a light-transmitting portion in the first welding section, the functional layer is provided on the entirety of the surface of the first base member composed of the light-transmitting substrate, and then part of the functional layer is removed by means of the laser-etching laser, which not only simplifies the manufacturing process (because providing the functional layer in the entirety is easier than partially providing the functional layer), but also ensures the light transmission of the part where the functional layer is removed, because the laser-etching laser can remove the functional layer more completely as compared with other removal techniques such that there is no remaining functional layer affecting the fusion of the two components during laser welding.

In this way, i.e. step S211 of providing the second base member composed of the light-absorbing substrate, wherein a surface of the second base member has a second welding section and a second treatment section;
step S212 of carrying out anti-plating treatment on the second welding section, preferably coating with an anti-plating layer, so as to form a second prefabricated member having an anti-plating region in the second welding section;
step S213 of electroplating the entirety of the second base member such that the surface of the second base member is coated with an electroplating layer except for the second welding section to form the second component having the light-absorbing portion in the second welding section, the second base member composed of the light-absorbing substrate is first provided with the anti-plating region and then subjected to electroplating treatment in the entirety, which not only simplifies the manufacturing process (because the electroplating treatment in the entirety is simpler than the partial electroplating treatment), but also ensures that the anti-plating region is not affected by the electroplating treatment, so that the anti-plating region absorbs the welding laser as completely as possible during laser welding, thereby ensuring the fusion of the two components during laser welding.

According to an optional embodiment of the present invention, the first welding section is configured as a recess and has a depth. In this way, the first welding section having the recess is easier to cover than another pair of welding components, which is convenient to hide the originally visible welding portion.

According to an optional embodiment of the present invention, the second welding section is configured as a protrusion, preferably an L-shaped welding rib, and has a thickness. In this way, the second welding section configured as a protrusion, preferably an L-shaped welding rib, is easier to align during laser welding and is also easier to fit with another pair of welding components.

According to an optional embodiment of the present invention, the depth is substantially consistent with the thickness. In this way, in the case where the depth of the first welding section configured as a recess is consistent with the thickness of the second welding section configured as a protrusion, preferably an L-shaped welding rib, the first component having the first welding section can fit flush with the second component having the second welding section, which is more conducive to a high-quality appearance effect.

According to an optional embodiment of the present invention, in step S212, a side edge of the second welding section configured as a protrusion is also subjected to anti-plating treatment, preferably coated with an anti-plating layer. In this way, it is ensured that the side edge of the second welding section also fully absorbs the welding laser during laser welding, thereby achieving more complete fusion of the two components.

According to an optional embodiment of the present invention, the area of the light-transmitting portion is equal to the area of the light-absorbing portion, preferably, the area of the light-transmitting portion is greater than the area of the light-absorbing portion. This avoids the melting and welding damage of part of the non-welding region of the first component caused by the welding laser being accidentally absorbed by the functional layer region during laser welding.

According to an optional embodiment of the present invention, the first component and the second component are positioned abutting against each other under the action of a clamping force. This further ensures that the laser welding occurs between the light-transmitting portion of the first component and the light-absorbing portion of the second component without accidental displacement.

According to an optional embodiment of the present invention, a first front side of the first component is flush with a second front side of the second component to form an assembly front side of the welded assembly, wherein the assembly front side faces a user in the usage appearance region. In this way, in the eyes of the user, there is no uneven and low-quality appearance decoration effect in the appearance region of the household appliance, thereby improving the use experience of the user.

According to an optional embodiment of the present invention, the first base member and/or the second base member are made of a plastic material. This makes it easier to achieve fusion of the two components by means of the welding laser.

According to an optional embodiment of the present invention, the first base member and/or the second base member are integrally formed components. This simplifies the process and reduces the number of components.

According to an optional embodiment of the present invention, the first base member is composed of a light-transmitting substrate that has high transmissivity, preferably complete transmission, to the welding laser. This makes it easier for the first component to allow transmission of the welding laser during laser welding, avoiding unnecessary laser loss.

According to an optional embodiment of the present invention, the second base member is composed of a dark substrate, preferably a black substrate, which has high absorptivity, preferably complete absorption, for the welding laser. This makes it easier for the second component to absorb the welding laser during laser welding, avoiding unnecessary laser loss.

According to an optional embodiment of the present invention, the first base member and the second base member are made of different plastic materials, preferably plastic materials having similar melting points, for example, respectively made of ABS plastic and an acrylic material. This enables laser welding between different plastic materials, because the plastic materials having similar melting points are more conducive to achieving fusion between the two components.

According to an optional embodiment of the present invention, the first base member and the second base member are made of the same plastic material, for example, made of ABS plastic or an acrylic material. In this way, the two components made of the same plastic material are further conducive to fusion of the components.

According to a second aspect of the present invention, the embodiments of the present invention provide a welded assembly for a household appliance, the welded assembly comprising at least:
a first component and a second component, and
a welding portion between the first component and the second component, the welded assembly forming a usage appearance region of the household appliance, with the welding portion being hidden in the usage appearance region,
wherein the welded assembly is manufactured by means of the welding method according to the embodiments in the first aspect of the present invention.

In this way, such a welded assembly has at least the advantages mentioned in the first aspect described above that the household appliance has a high-quality decorative appearance effect and that the two connected components are less prone to aging and detachment.

According to an optional embodiment of the present invention, the welded assembly has an assembly front side facing a user in the usage appearance region, and the assembly front side is composed of a first front side of the first component and a second front side of the second component which are flush with each other.

In this way, in the eyes of the user, there is no uneven and low-quality appearance decoration effect in the appearance region of the household appliance, thereby improving the use experience of the user.

According to an optional embodiment of the present invention, in the assembly front side, a height difference between the first front side of the first component and the second front side of the second component is at most 0.2 mm, preferably 0. This achieves a nearly completely smooth transition between the two components in the assembly front side.

According to an optional embodiment of the present invention, in the assembly front side, a gap between the first front side of the first component and the second front side of the second component is at most 0.3 mm, preferably 0. This achieves a nearly no-gap transition between the two components in the assembly front side.

According to a third aspect of the present invention, the embodiments of the present invention provide an appearance member for a household appliance, the appearance member comprising a welded assembly according to the embodiments in the second aspect of the present invention. In this way, such an appearance member has at least the advantages mentioned in the second aspect described above that the household appliance has a high-quality decorative appearance effect and that the two connected components are less prone to aging and detachment.

According to an optional embodiment of the present invention, the appearance member further comprises electronic elements that are arranged on an assembly back side of the welded assembly facing away from the user and are configured to control the household appliance. In this way, by means of the welding method according to the embodiments of the present invention, these electronic elements can be well-protected on the assembly back side, especially achieving a waterproof function.

According to an optional embodiment of the present invention, the appearance member is a control panel. In this way, by means of the welding method according to the embodiments of the present invention, the control panel of a household appliance avoids the problems, such as aging and detachment, of the connection parts of the component while achieving the high-quality appearance effect.

According to an optional embodiment of the present invention, the appearance member is a door ring of a washing machine. In this way, by means of the welding method according to the embodiments of the present invention, the door ring of a washing machine avoids the problems, such as aging and detachment, of the connection parts of the components while achieving the high-quality appearance effect.

According to a fourth aspect of the present invention, the embodiments of the present invention provide a household appliance, comprising a welded assembly according to the embodiments in the second aspect of the present invention and/or an appearance member according to the embodiments in the third aspect of the present invention. In this way, such a household appliance has at least the advantages mentioned in the second aspect and/or in the third aspect described above that the household appliance has a high-quality decorative appearance effect and that the two connected components are less prone to aging and detachment.

According to an optional embodiment of the present invention, the household appliance is a water-guided household appliance. In this way, by means of the welding method according to the embodiments of the present invention, the water-guided household appliance avoids the problems, such as aging and detachment, of the connection parts of the components, especially achieving a waterproof function for the electronic elements arranged near the welding part, while achieving the high-quality appearance effect.

According to an optional embodiment of the present invention, the household appliance is a washing machine, a dishwasher, or an electric coffee maker. In this way, by means of the welding method according to the embodiments of the present invention, the household appliance such as a washing machine, a dishwasher or an electric coffee maker avoids the problems, such as aging and detachment, of the connection parts of the components while achieving the high-quality appearance effect.

In the following, the principles, features and advantages of the present invention can be better understood by describing the present invention in more detail with reference to the accompanying drawings. In the drawings:
Fig. 1 shows a schematic flowchart of a welding method for a household appliance according to an exemplary embodiment of the present invention;
Fig. 2 shows a schematic diagram of a household appliance according to an exemplary embodiment of the present invention;
Fig. 3 shows a schematic structural perspective view of a first component having a light-transmitting portion provided at step S 100 of the welding method for a household appliance according to an exemplary embodiment of the present invention;
Fig. 4 shows a rear view of the first component according to an exemplary embodiment of the present invention, as viewed in direction A in Fig. 3, in order to better illustrate the details of a back side of the first component;
Fig. 5 shows a schematic structural perspective view of a second component having a light-absorbing portion provided at step S200 of the welding method for a household appliance according to an exemplary embodiment of the present invention;
Fig. 6 shows a rear view of the second component according to an exemplary embodiment of the present invention, as viewed in direction B in Fig. 5, in order to better illustrate the details of the back side of the second component;
Fig. 7 shows a schematic structural perspective view of step S300 of the welding method for a household appliance according to an exemplary embodiment of the present invention;
Fig. 8 shows a schematic structural perspective view of step S400 of the welding method for a household appliance according to an exemplary embodiment of the present invention;
Fig. 9 shows a schematic structural perspective view of a welded assembly formed after performance of step S400 of the welding method for a household appliance according to an exemplary embodiment of the present invention;
Fig. 10 shows a front view of the welded assembly according to an exemplary embodiment of the present invention, as viewed in direction C in Fig. 9, in order to better illustrate the details of a front side of the welded assembly;
Fig. 11 shows a schematic flowchart of sub-steps of step S 100 of the welding method for a household appliance according to an exemplary embodiment of the present invention;
Fig. 12 shows a schematic structural perspective view of the sub-steps of step S 100 of the welding method for a household appliance according to an exemplary embodiment of the present invention;
Fig. 13 shows a schematic flowchart of sub-steps of step S100 of the welding method for a household appliance according to an exemplary embodiment of the present invention;
Fig. 14 shows a schematic structural perspective view of the sub-steps of step S 100 of the welding method for a household appliance according to an exemplary embodiment of the present invention;
Fig. 15 shows a schematic flowchart of sub-steps of step S200 of the welding method for a household appliance according to an exemplary embodiment of the present invention;
Fig. 16 shows a schematic structural perspective view of the sub-steps of step S200 of the welding method for a household appliance according to an exemplary embodiment of the present invention;
Fig. 17 shows a schematic flowchart of sub-steps of step S200 of the welding method for a household appliance according to an exemplary embodiment of the present invention;
Fig. 18 shows a schematic structural perspective view of the sub-steps of step S200 of the welding method for a household appliance according to an exemplary embodiment of the present invention; and
Figs. 19(a) to 19(c) show schematic structural sectional views of the steps of the welding method for a household appliance according to an exemplary embodiment of the present invention.

Embodiments of the present invention will be described in detail below, and exemplary embodiments are shown in the drawings, with the same or similar reference numerals throughout the drawings representing the same or similar elements or the elements having the same or similar functions. The embodiments described below with reference to the accompanying drawings are exemplary and are intended to be illustrative of the present invention, and will not be interpreted as limiting the present invention.

In the description of the present invention, it should be understood that the orientations or position relationships indicated by the terms, such as "upper", "lower", "front", "rear", "left", "right", "vertical", "horizontal", "top", "bottom", "inner", "outer", "longitudinal", "transverse", "high", "front side", or "back side", are based on the orientations or position relationships shown in the accompanying drawings and are merely for ease of description of the present invention and simplification of the description, rather than indicating or implying that the devices or elements referred to necessarily have specific orientations or are configured and operated in specific orientations, and thus cannot be construed as limiting the present invention.

In addition, the expression "A and/or B" denotes all possible combinations of A and B, such as A only, B only, or both A and B. The expression "at least one A or B" or "at least one of A and B" has a similar meaning as "A and/or B", and may include A only, B only, or both A and B. The terms "first" and "second" are intended for descriptive purposes only and should not be construed as indicating or implying relative importance or implicitly indicating the number of technical features indicated. Thus, the features defined with "first" and "second" may explicitly or implicitly include one or more features. In the description of the present invention, the expression "a plurality of" means two or more, unless explicitly and specifically defined otherwise.

The exemplary embodiments of the present invention will be described below with respect to the accompanying drawings.

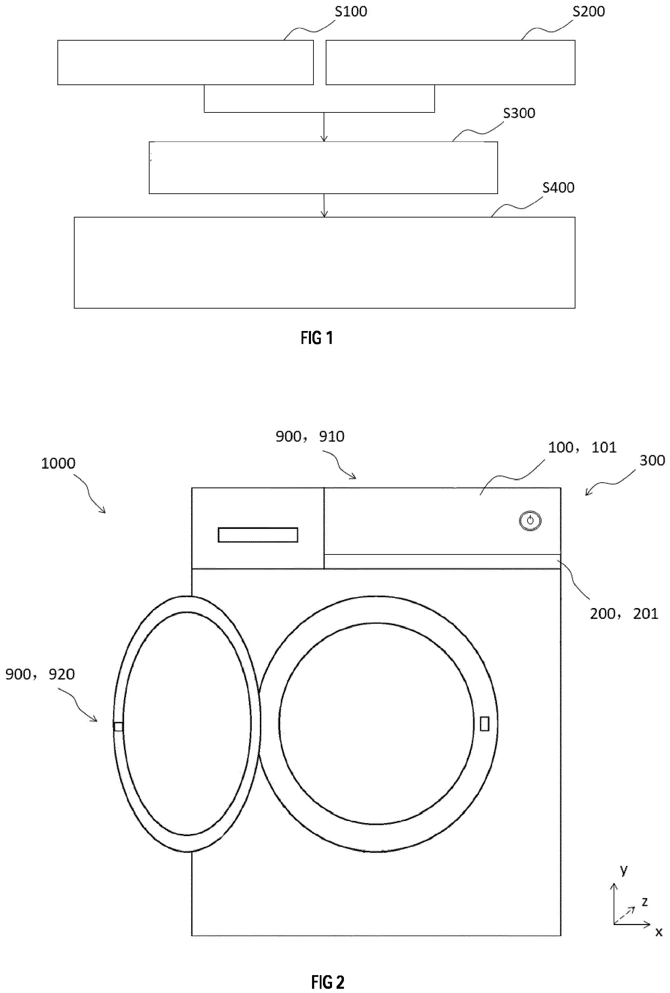

Fig. 1 is a schematic flowchart of a welding method for a household appliance 1000 according to an exemplary embodiment of the present invention. As shown in Fig. 1, the welding method for a household appliance 1000 according to an exemplary embodiment of the present invention comprises at least:
step S100 of providing a first component 100 having a light-transmitting portion 10;
step S200 of providing a second component 200 having a light-absorbing portion 20;
step S300 of positioning the first component 100 and the second component 200 relative to each other such that the light-transmitting portion 10 and the light-absorbing portion 20 have an overlapping region 50; and
step S400 of directing welding laser 400 onto the light-absorbing portion 20 through the light-transmitting portion 10 in the overlapping region 50 to form a welding portion 30 between the light-transmitting portion 10 and the light-absorbing portion 20, so that the first component 100 and the second component 200 are welded together to form a welded assembly 300, wherein the welded assembly 300 forms a usage appearance region of the household appliance 1000, with the welding portion 30 being hidden in the usage appearance region.

It should be noted that, within the scope of the present invention, the term "usage appearance region" should particularly be understood as an appearance region that directly faces a user during regular use of the household appliance 1000 by the user, or an appearance region that is directly visible to the user during regular use of the household appliance 1000.

Here, the selection of parameters of the welding laser 400 is dependent on specific applications, such as the material and the fusion area, of the two components. Optionally, the welding laser 400 has a laser wavelength in a range from 900 µm to 1000 µm, and a laser power in a range from 5 W to 20 W. The selection range of parameters of the welding laser 400 is particularly conducive to implementing the welding method provided in the embodiment of the present invention.

The household appliance 1000 and the constituent parts for implementing the welding method should be particularly understood with reference to the embodiments that will be described below with respect to the figures.

Fig. 2 shows a schematic diagram of a household appliance 1000 according to an exemplary embodiment of the present invention. In Fig. 2, the household appliance 1000 is shown as a washing machine. It should be understood that the household appliance 1000 can also be configured as a household appliance in another form, in particular a water-guided household appliance, such as a dishwasher or an electric coffee maker, etc.

According to an exemplary embodiment of the present invention, as also shown in Fig. 2, the household appliance 1000 comprises an appearance member 900. Exemplarily, the appearance member 900 is configured as a control panel 910 and/or a door ring 920 of a washing machine, because the control panel 910 and the door ring 920 of the washing machine generally comprise electronic elements or electronic sensors and are generally configured by connection of two or more components, and thus are especially applicable for the welding method according to the embodiment of the present invention. For the door ring 920 of the washing machine, by means of the welding method provided in the embodiment of the present invention, the fusion of a display screen and a door cover plate can be achieved, and in the case of using integrated in-mold injection molding, the display screen can be hidden in the door cover plate when the display screen is turned off, for example, showing a one-piece black decoration effect, thereby achieving a high-quality appearance effect.

According to an exemplary embodiment of the present invention, the appearance member 900 for the household appliance 1000 comprises a welded assembly 300 manufactured according to the steps of the method in Fig. 1, and Fig. 2 schematically shows the welded assembly 300 as a portion of the appearance member 900 configured as the control panel 910.

According to an exemplary embodiment of the present invention, the appearance member 900 further comprises electronic elements (not shown here) which are arranged on an assembly back side 302 of the welded assembly 300 facing away from the user and are configured to control the household appliance 1000. Exemplarily, the electronic elements here involve switch circuits that can trigger the start and stop of the household appliance 1000, and the electronic elements or switch circuits are electrically connected to switch buttons schematically shown in Fig. 2 and the subsequent figures. In general, the electronic elements or switch circuits need to be attached to a rear surface of the control panel, and based on the conventional safety requirements of household appliances, it is necessary to ensure that the components covering the electronic elements or switch circuits will not age or come off.

Fig. 2 further shows a width direction x, a height direction y and a depth direction z of the household appliance 1000 as a washing machine in a regular use state. For clarity, the subsequent figures also use the xyz rectangular coordinate system shown in Fig. 2. In other words, the corresponding orientations of the constituent parts of the welded assembly 300 that form the household appliance 1000 are shown in the subsequent figures based on the xyz rectangular coordinate system shown in Fig. 2, in order to better illustrate a front side (i.e. a region surface of the finally formed household appliance 1000 that is directly visible to the user during regular use) of the constituent parts and a back side (i.e. a region surface of the finally formed household appliance 1000 that is not directly visible to the user during regular use) arranged opposite the front side.

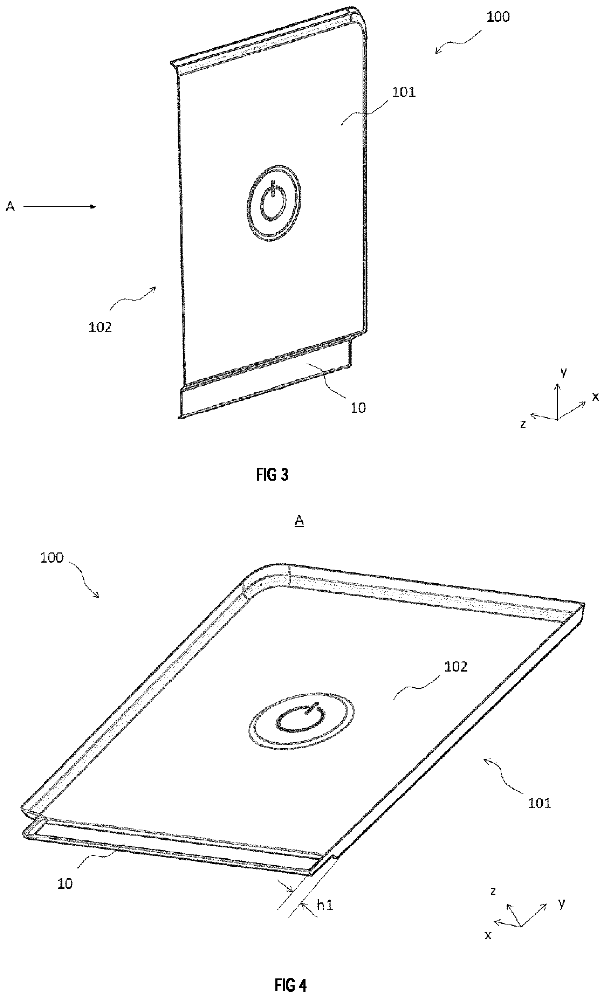

Fig. 3 shows a schematic structural perspective view of a first component 100 having a light-transmitting portion 10 provided at step S 100 of the welding method for a household appliance 1000 according to an exemplary embodiment of the present invention. Fig. 4 shows a rear view of the first component 100 according to an exemplary embodiment of the present invention, as viewed in direction A in Fig. 3, in order to better illustrate the details of the back side of the first component 100.

As shown in Figs. 3 and 4, according to an exemplary embodiment of the present invention, the first component 100 has a first front side 101 and a first back side 102 arranged opposite the first front side 101. Here, the first front side 101 is a region surface that is directly visible to the user during regular use of the household appliance 1000, and the first back side 102 is a region surface that is not directly visible to the user during regular use of the household appliance 1000. Here, exemplarily, the light-transmitting portion 10 of the first component 100 is located at a lower portion thereof and has a depth h1.

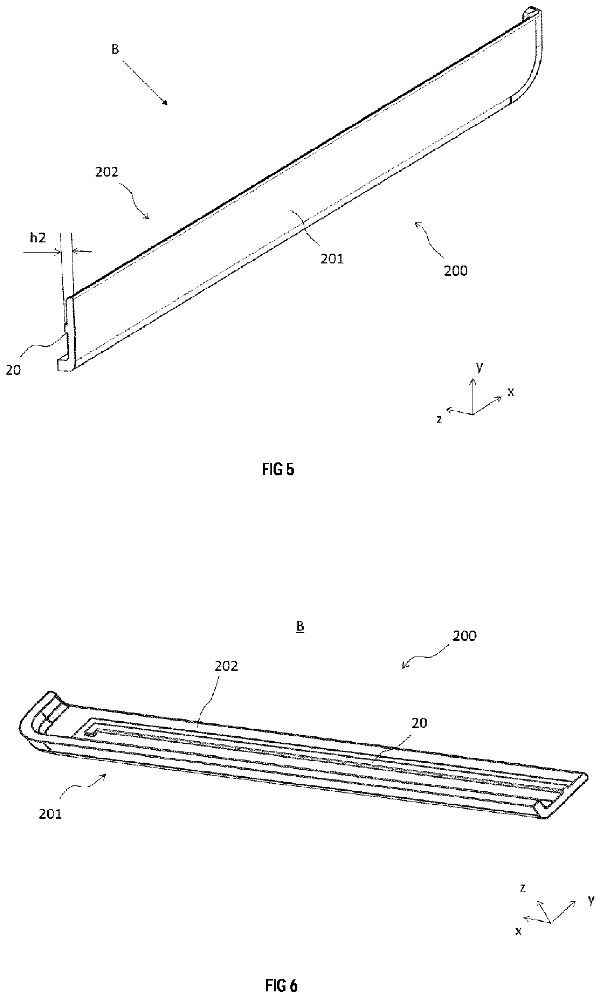

Fig. 5 shows a schematic structural perspective view of a second component 200 having a light-absorbing portion 20 provided at step S200 of the welding method for a household appliance 1000 according to an exemplary embodiment of the present invention. Fig. 6 shows a rear view of the second component 200 according to an exemplary embodiment of the present invention, as viewed in direction B in Fig. 5, in order to better illustrate the details of the back side of the second component 200.

As shown in Figs. 5 and 6, the second component 200 according to an exemplary embodiment of the present invention has a second front side 201 and a second back side 202 arranged opposite the second front side 201. Here, the second front side 201 is a region surface that is directly visible to the user during regular use of the household appliance 1000, and the second back side 202 is a region surface that is not directly visible to the user during regular use of the household appliance 1000. Here, exemplarily, the light-absorbing portion 20 of the first component 200 is located in the middle thereof, is configured as a protrusion (an L-shaped welding rib shown in Fig. 6), and has a thickness h2.

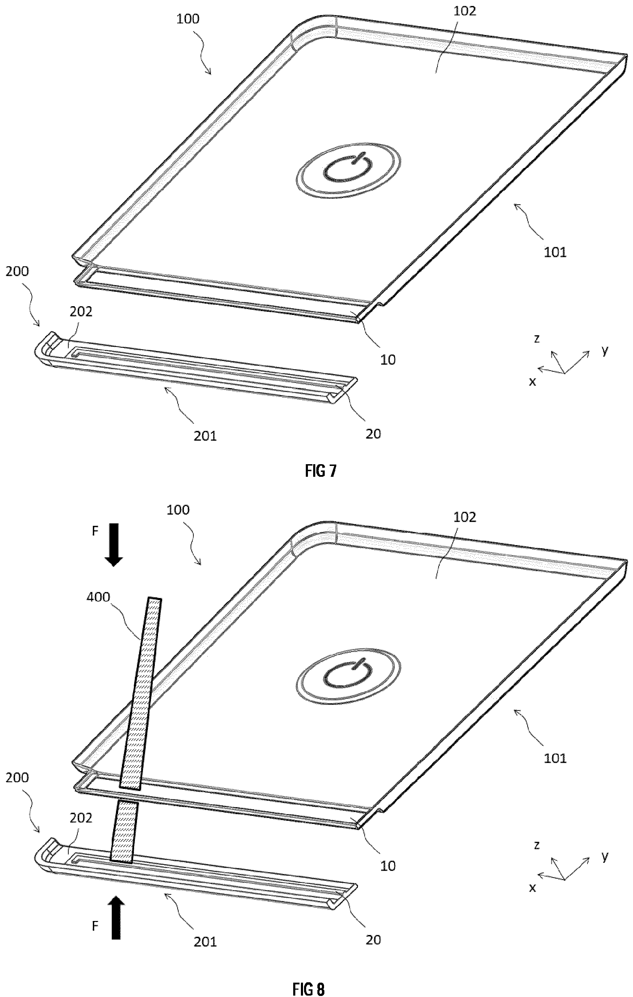

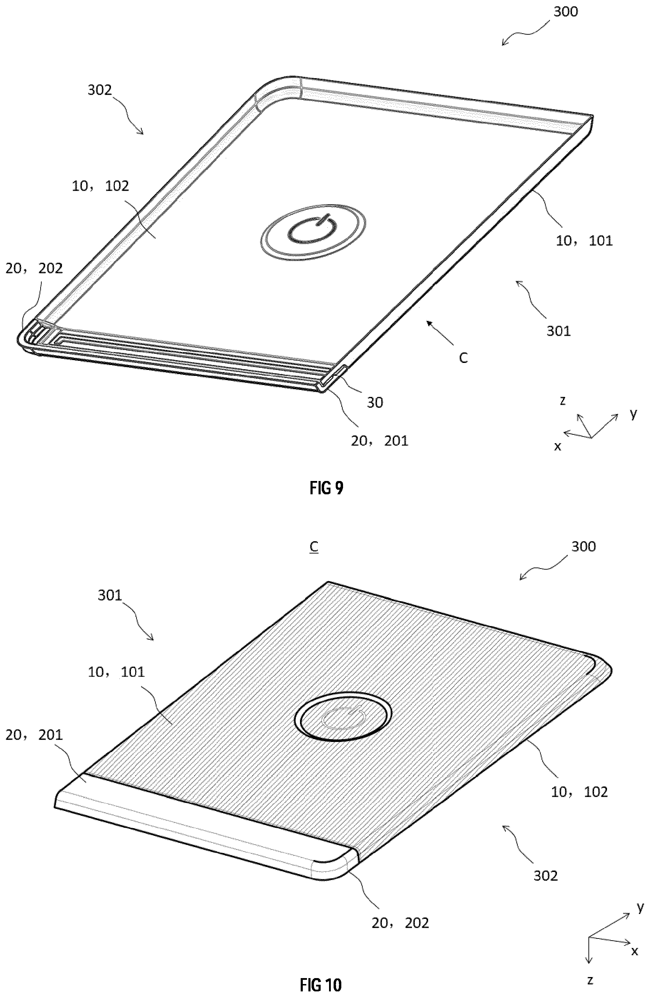

Fig. 7 shows a schematic structural perspective view of step S300 of the welding method for a household appliance 1000 according to an exemplary embodiment of the present invention. Fig. 8 shows a schematic structural perspective view of step S400 of the welding method for a household appliance 1000 according to an exemplary embodiment of the present invention. Fig. 9 shows a schematic structural perspective view of a welded assembly 300 after performance of step S400 of the welding method for a household appliance 1000 according to an exemplary embodiment of the present invention. Fig. 10 shows a front view of the welded assembly according to an exemplary embodiment of the present invention, as viewed in direction C in Fig. 9, in order to better illustrate the details of a front side of the welded assembly.

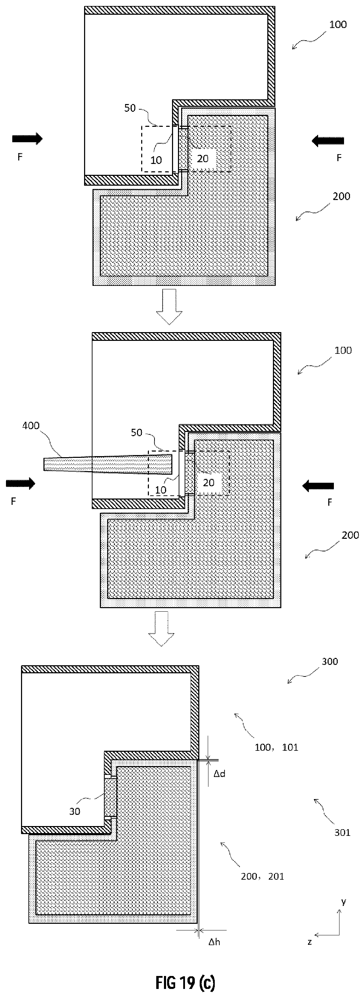

Here, for ease of understanding, in Figs. 7 and 8, the first component 100 and the second component 200 are shown apart from each other, so that the positions of action of the welding laser 400 on the two components can be clearly seen. However, it should be understood that the first component 100 and the second component 200 are positioned abutting against each other during actual laser welding. Optionally, the first component 100 and the second component 200 are positioned abutting against each other under the action of a clamping force F, as seen in Fig. 8 and Fig. 19(c) that is described later.

As shown in Figs. 7 to 10, particularly with reference to Figs. 9 and 10, the welded assembly 300, which is formed after performance of step S400 of the welding method for a household appliance 1000 according to an exemplary embodiment of the present invention, has an assembly front side 301 and an assembly back side 302 arranged opposite the assembly front side 301. Here, the assembly front side 301 is a region surface that is directly visible to the user during regular use of the household appliance 1000, and the assembly back side 302 is a region surface that is not directly visible to the user during regular use of the household appliance 1000. With respect to Figs. 3 to 6, in the welded assembly 300 formed after performance of step S400, the first front side 101 of the first component 100 and the second front side 201 of the second component 200 jointly form the assembly front side 301 of the welded assembly 300, and the first back side 102 of the first component 100 and the second back side 202 of the second component 200 jointly form the assembly back side 302 of the welded assembly 300. With respect to Fig. 2, an electronic element (not shown here), which is included in the appearance member 900 having the welded assembly 300 and is configured to control the household appliance 1000, is arranged on the assembly back side 302. According to the examples in Figs. 9 and 10, the assembly front side 301 of the welded assembly 300 is provided with a switch button which is convenient for the user to trigger by pressing, and the switch button is especially electrically connected to the electronic element provided on the assembly back side 302. Here, the electronic element provided on the assembly back side 302 may also be understood as a circuit board or an electronic device provided with electronic elements. In particular, based on the example in Fig. 10, since the second front side 201 of the second component 200 is an electroplated opaque surface, the welding portion 30 located behind the second component is just coated, so that there is no easily visible connection part on the assembly front side 301 of the welded assembly 300, thereby achieving a high-quality appearance decoration effect.

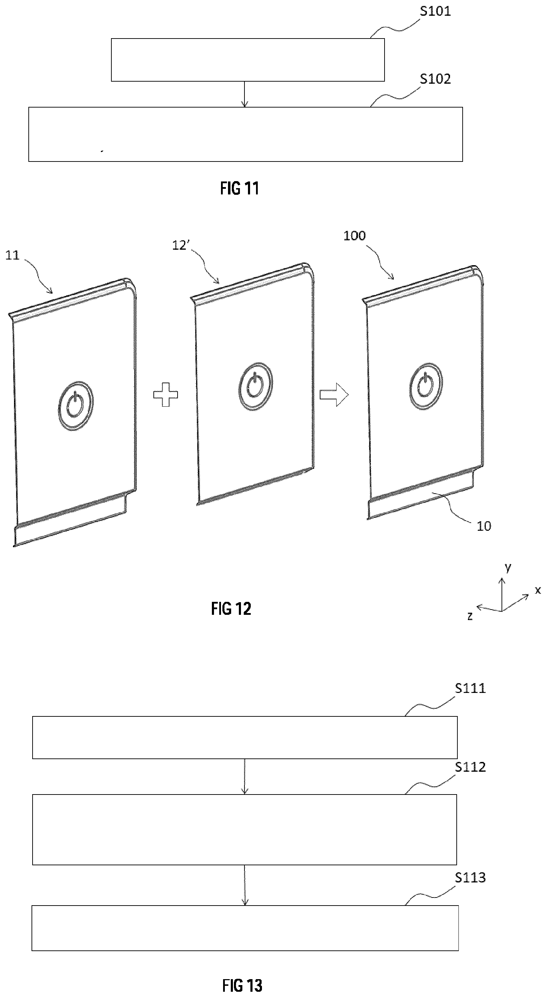

Fig. 11 shows a schematic flowchart of sub-steps of step S100 of the welding method for a household appliance 1000 according to an exemplary embodiment of the present invention. Fig. 12 shows a schematic structural perspective view of the sub-steps of step S100 of the welding method for a household appliance 1000 according to an exemplary embodiment of the present invention.

As shown in Figs. 11 and 12, the welding method for a household appliance 1000 according to an exemplary embodiment of the present invention (more specifically, step S100 of the welding method) comprises the following sub-steps:
step S101 of providing a first base member 11 composed of a light-transmitting substrate; and
step S102 of carrying out partial process treatment (preferably by means of partial integrated in-mold injection molding) on the first base member 11 to provide a functional layer 12' (in particular an ink layer and/or a UV protective layer) so as to form a first component 100 having a light-transmitting portion 10 in the part that is not provided with the functional layer 12'.

For the functional layer 12', whether it is the colored ink layer or the UV protective layer that looks transparent, the fusion of the two components will be affected during laser welding, and thus the part of the light-transmitting substrate that is not provided with the functional layer 12' is most suitable as the light-transmitting portion 10 to facilitate the implementation of laser welding.

Within the scope of the present invention, the integrated in-mold injection molding may be understood as in-mold decoration (IMD) or in-mold labeling (IML), in which a decorative layer or a decorative film is usually provided by means of injection molding or hot padding.

As schematically shown in Fig. 12, the region of the functional layer 12' is smaller than the surface region of the first base member 11, thereby achieving the effect of partially providing the functional layer 12', and the part that is not provided with the functional layer 12' forms the light-transmitting portion 10.

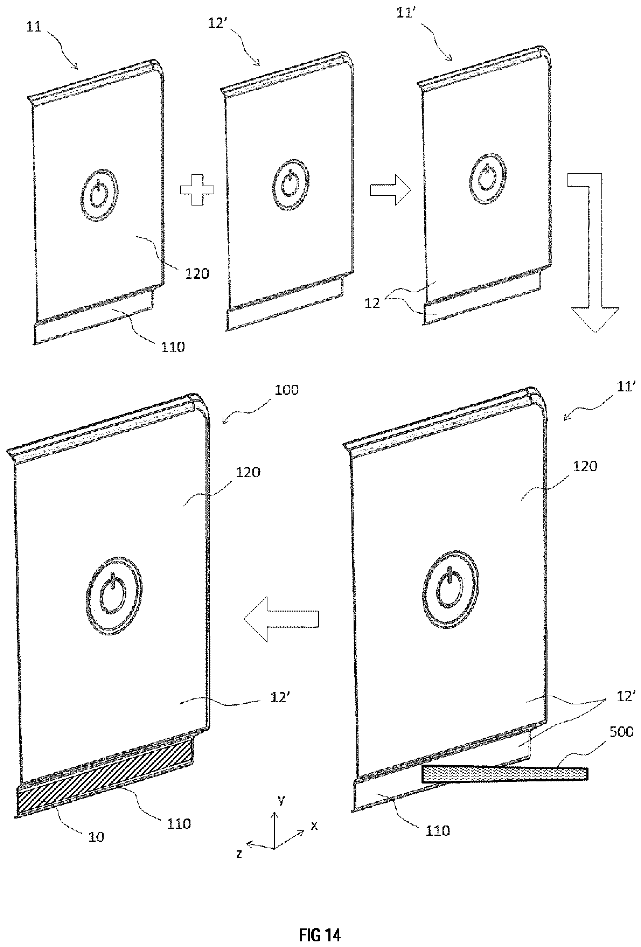

Fig. 13 shows a schematic flowchart of sub-steps of step S100 of the welding method for a household appliance 1000 according to an exemplary embodiment of the present invention. Fig. 14 shows a schematic structural perspective view of the sub-steps of step S100 of the welding method for a household appliance 1000 according to an exemplary embodiment of the present invention.

As shown in Figs. 13 and 14, the welding method for a household appliance 1000 according to an exemplary embodiment of the present invention (more specifically, step S100 of the welding method) comprises the following sub-steps:
step S111 of providing a first base member 11 composed of a light-transmitting substrate, with a surface of the first base member 11 having a first welding section 110 and a first treatment section 120;
step S112 of carrying out process treatment (preferably by means of integrated in-mold injection molding) on the first welding section 110 and the first treatment section 120 to provide the functional layer 12' (in particular the ink layer and/or the UV protective layer) so as to form a first prefabricated member 11' having a functional region 12 in the first welding section 110 and the first treatment section 120; and
step S113 of stripping the functional layer 12' from the first welding section 110 (preferably by means of laser-etching removal with laser-etching laser 500) so as to form the first component 100 having the light-transmitting portion 10 in the first welding section 110.

In this embodiment, the functional layer 12' is provided on the entirety of the surface of the first base member 11, and then the functional layer 12' in a welded region (i.e. the first welding section 110) is removed (e.g. by means of laser-etching removal), which is more in line with the actual process, because the process originally set for the in-mold injection molding machine commonly used is an injection molding process in the entirety rather than a partial injection molding process. Thus, this embodiment is more suitable for application based on a conventional injection molding machine without the need for excessive modification of the machinery.

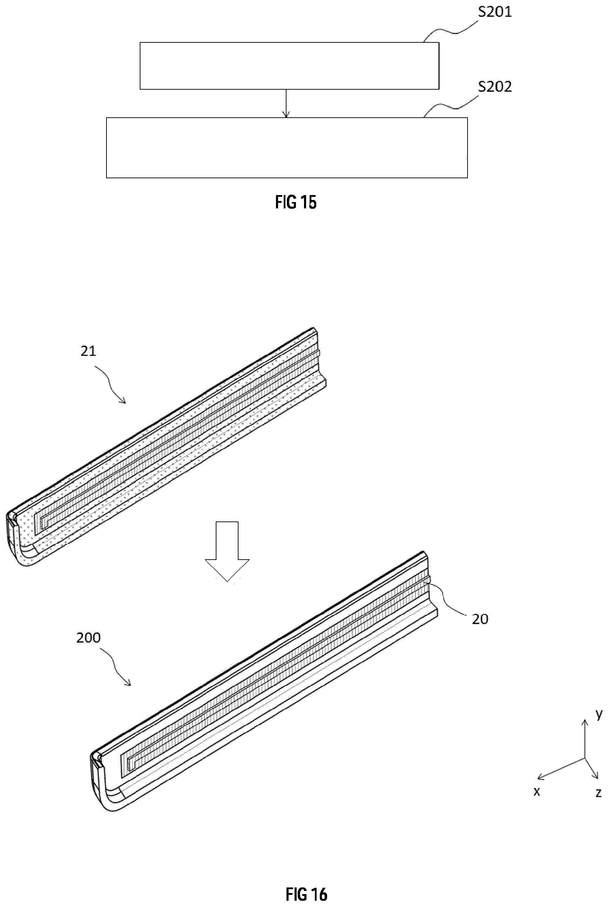

Fig. 15 shows a schematic flowchart of sub-steps of step S200 of the welding method for a household appliance 1000 according to an exemplary embodiment of the present invention. Fig. 16 shows a schematic structural perspective view of the sub-steps of step S200 of the welding method for a household appliance 1000 according to an exemplary embodiment of the present invention.

As shown in Figs. 15 and 16, the welding method for a household appliance 1000 according to an exemplary embodiment of the present invention (more specifically, step S200 of the welding method) comprises the following sub-steps:
step S201 of providing a second base member 21 composed of a light-absorbing substrate; and
step S202 of carrying out partial electroplating treatment on the second base member 21 to form the second component 200 having the light-absorbing portion 20 in the part that is not subjected to electroplating treatment.

Here, the electroplating layer provided in the electroplating treatment will significantly reduce the light absorption of the light-absorbing substrate and even cause reflection, which is not conducive to laser welding. However, for household appliances, providing an electroplating layer is necessary for both appearance and function. Thus, in order to further facilitate the implementation of the welding method provided in the embodiment of the present invention, the partial electroplating treatment is used in this embodiment, especially presenting an electroplating layer on the entirety of the usage appearance region in the final application, with the region that is not electroplated being hidden on the back side of the usage appearance region and being not noticeable.

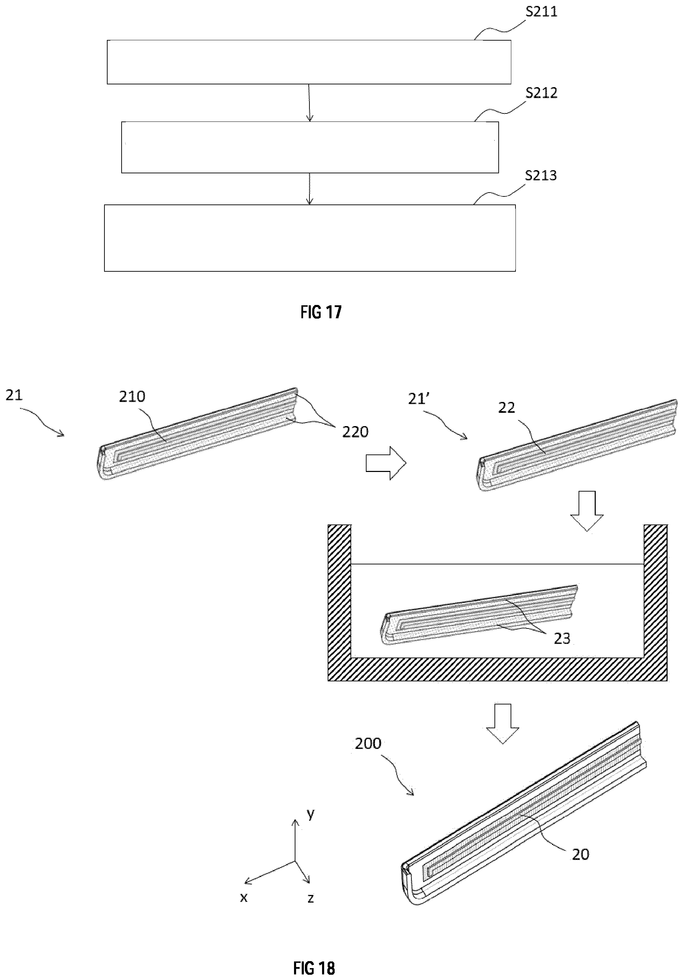

Fig. 17 shows a schematic flowchart of sub-steps of step S200 of the welding method for a household appliance 1000 according to an exemplary embodiment of the present invention. Fig. 18 shows a schematic structural perspective view of the sub-steps of step S200 of the welding method for a household appliance 1000 according to an exemplary embodiment of the present invention.

As shown in Figs. 17 and 18, the welding method for a household appliance 1000 according to an exemplary embodiment of the present invention (more specifically, step S200 of the welding method) comprises the following sub-steps:
step S211 of providing the second base member 21 composed of the light-absorbing substrate, with a surface of the second base member 21 having a second welding section 210 and a second treatment section 220;
step S212 of carrying out anti-plating treatment on the second welding section 210 (preferably by means of coating with an anti-plating layer 22) so as to form a second prefabricated member 21' having an anti-plating region 22 in the second welding section 210; and
step S213 of electroplating the entirety of the second base member 21 (in particular, as schematically shown in Fig. 18, immersing the entirety of the second base member 21 in an electroplating tank for electroplating) such that the surface of the second base member 21 is coated with an electroplating layer 23 except for the second welding section 210 to form the second component 200 having the light-absorbing portion 20 in the second welding section 210.

In this embodiment, before the regular electroplating treatment, the welded region (i.e. the second welding section 210) of the second base member 21 is subjected to anti-plating treatment (e.g. spraying with an anti-plating oil), and thus the effect of partial electroplating can be achieved without modification of the existing integral electroplating treatment machinery (typically, an electroplating tank).

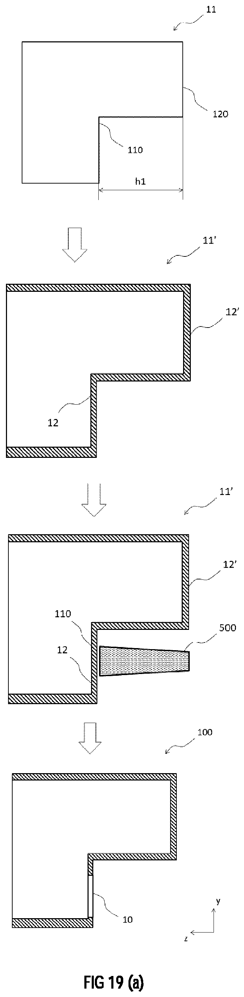

Figs. 19(a) to 19(c) show schematic structural sectional views of the steps of the welding method for a household appliance 1000 according to an exemplary embodiment of the present invention.

According to an exemplary embodiment of the present invention, as shown in Fig. 19(a) and also with respect to Fig. 4, the first welding section 110 of the first component 100 is configured as a recess and has a depth h1.

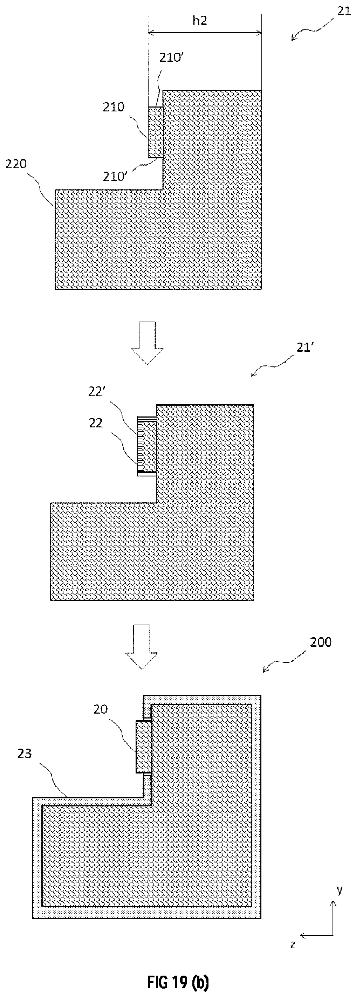

According to an exemplary embodiment of the present invention, as shown in Fig. 19(b) and also with respect to Figs. 5 and 6, the second welding section 210 of the second component 200 is configured as a protrusion, preferably an L-shaped welding rib, and has a thickness h2.

According to an exemplary embodiment of the present invention, the depth h1 is substantially consistent with the thickness h2.

According to an exemplary embodiment of the present invention, as shown in Fig. 19(b) and also with respect to Figs. 17 and 18, in step S212, a side edge 210' of the second welding section 210 configured as the protrusion is also subjected to anti-plating treatment (preferably coated with an anti-plating layer 22). In addition to the side edge 210' as schematically shown in Fig. 19(b), the second welding section 210 has a process allowance (e.g. about 2 mm) around the side edge 210' during the actual anti-plating treatment, which considers the splashing and overflow of an anti-plating coating during spraying/brushing, in order to better determine the anti-plating region.

According to an exemplary embodiment of the present invention, the area of the light-transmitting portion 10 is equal to the area of the light-absorbing portion 20. Optionally, as also shown in Fig. 19(c), the area of the light-transmitting portion 10 is slightly greater than the area of the light-absorbing portion 20. In the case where the area of the light-transmitting portion 10 is equal to, especially slightly greater than, the area of the light-absorbing portion 20, during laser welding, it is especially possible to prevent the melting and welding damage of a non-welding region (e.g. the first treatment section) of the first component due to absorption of welding laser energy by the light-absorbing part of the second component 200 that is not subjected to electroplating treatment. In the case where the area of the light-transmitting portion 10 especially covers the side edge (e.g. the side edge 210') of the light-absorbing portion 20, it is especially possible to ensure that the side of the light-absorbing portion 20 is also sufficiently molten during laser welding. Moreover, the case where the area of the light-transmitting portion 10 is slightly greater than the area of the light-absorbing portion 20 can especially cover up the deviation during the movement of the welding laser in the actual production process.

According to an exemplary embodiment of the present invention, as shown in Fig. 19(c) and also with respect to Fig. 8, the first component 100 and the second component 200 are positioned abutting against each other under the action of the clamping force F. Here, the clamping force F can be understood as the clamping force F that is provided by a clamping mechanism (e.g. a fixture of a laser welding machine) having a mutual opposing effect, so that the first component 100 and the second component 200 are less prone to displacement relative to each other.

According to an exemplary embodiment of the present invention, as shown in Fig. 19(c) and also with respect to Fig. 10, the first front side 101 of the first component 100 is flush with the second front side 201 of the second component 200 to form an assembly front side 301 of the welded assembly 300, with the assembly front side 301 facing the user in the usage appearance region.

According to an exemplary embodiment of the present invention, as shown in Figs. 19(a) and 19(b), the first base member 11 and/or the second base member 21 are made of a plastic material.

According to an exemplary embodiment of the present invention, as shown in Figs. 19(a) and 19(b), the first base member 11 and/or the second base member 21 are integrally formed components.

According to an exemplary embodiment of the present invention, as shown in Fig. 19(a), the first base member 11 is composed of a light-transmitting substrate that has high transmissivity (preferably complete transmission) to the welding laser 400.

According to an exemplary embodiment of the present invention, as shown in Fig. 19(b), the second base member 21 is composed of a dark substrate (preferably, a black substrate) that has high absorptivity (preferably complete absorption) for the welding laser 400.

According to an exemplary embodiment of the present invention, as shown in Figs. 19(a) and 19(b), the first base member 11 and the second base member 21 are made of different plastic materials (preferably, plastic materials having similar melting points), for example, respectively made of ABS plastic and an acrylic material.

According to an exemplary embodiment of the present invention, as shown in Figs. 19(a) and 19(b), the first base member 11 and the second base member 21 are made of the same plastic material, for example, made of ABS plastic or an acrylic material.

As shown in Fig. 19(c) and also with respect to Figs. 9 and 10, the welded assembly 300 for a household appliance 1000 according to an exemplary embodiment of the present invention comprises at least:
a first component 100 and a second component 200, and
a welding portion 30 between the first component 100 and the second component 200, the welded assembly 300 forming a usage appearance region of the household appliance 1000, with the welding portion 30 being hidden in the usage appearance region. The welded assembly 300 is manufactured by means of the welding method according to the embodiments of the present invention.

According to an exemplary embodiment of the present invention, as shown in Fig. 19(c), the welded assembly 300 has an assembly front side 301 facing the user in the usage appearance region, and the assembly front side 301 is composed of the first front side 101 of the first component 100 and the second front side 201 of the second component 200 which are flush with each other.

According to an exemplary embodiment of the present invention, as shown in Fig. 19(c), in the assembly front side 301, a height difference Δh between the first front side 101 of the first component 100 and the second front side 201 of the second component 200 is at most 0.2 mm, preferably 0.

According to an exemplary embodiment of the present invention, as shown in Fig. 19(c), in the assembly front side 301, a gap Δd between the first front side 101 of the first component 100 and the second front side 201 of the second component 200 is at most 0.3 mm, preferably 0.

Next, an exemplary embodiment of the present invention is described with respect to Figs. 19(a) to 19(c):
as shown in Fig. 19(a), a first base member 11 composed of a light-transmitting substrate is first provided; then a functional layer 12' is provided on a surface of the first base member 11 by means of integrated in-mold injection molding so as to form a first prefabricated member 11' having a functional region 12 on the surface of the first base member 11; and then the functional layer 12' on a first welding section 110 of the first base member 11 is removed by means of laser-etching removal with laser-etching laser 500, so as to form the first component 100 having the light-transmitting portion 10 in the first welding section 110.

As shown in Fig. 19(b), a second base member 21 composed of a light-absorbing substrate is first provided; then a second welding section 210 of the second base member 21 is coated with an anti-plating layer 22 so as to form a second prefabricated member 21' having an anti-plating region 22 in the second welding section 210; and then electroplating is performed on the entirety of the second base member 21 such that the surface of the second base member 21 is coated with an electroplating layer 23 except for the second welding section 210 to form the second component 200 having the light-absorbing portion 20 in the second welding section 210.

Finally, as shown in Fig. 19(c), the first component 100 and the second component 200 are positioned abutting against each other under the action of a clamping force F such that the light-transmitting portion 10 of the first component 100 and the light-absorbing portion 20 of the second component 200 have an overlapping region 50; and then the welding laser 400 is directed onto the light-absorbing portion 20 through the light-transmitting portion 10 in the overlapping region 50 to form a welding portion 30 between the light-transmitting portion 10 and the light-absorbing portion 20, so that the first component 100 and the second component 200 are welded together to form a welded assembly 300, the welded assembly 300 forming a usage appearance region of the household appliance 1000, with the welding portion 30 being hidden in the usage appearance region. Although the specific embodiments are described above, these embodiments are not intended to limit the scope of the present invention, even in situations where only a single embodiment is described with reference to the particular features. The features exemplarily provided in the disclosure of the present invention are intended to be illustrative rather than limiting, unless expressly stated otherwise. In the specific implementation, multiple features can be combined with each other under technically feasible conditions according to practical needs. Various substitutions, alterations and modifications may also be devised without departing from the spirit and scope of the present invention.

## Claims

1. A welding method for a household appliance (1000), comprising at least:
step S100 of providing a first component (100) having a light-transmitting portion (10);
step S200 of providing a second component (200) having a light-absorbing portion (20);
step S300 of positioning the first component (100) and the second component (200) relative to each other such that the light-transmitting portion (10) and the light-absorbing portion (20) have an overlapping region (50); and
step S400 of directing a welding laser (400) onto the light-absorbing portion (20) through the light-transmitting portion (10) in the overlapping region (50) to form a welding portion (30) between the light-transmitting portion (10) and the light-absorbing portion (20), so that the first component (100) and the second component (200) are welded together to form a welded assembly (300), wherein the welded assembly (300) forms a usage appearance region of the household appliance (1000), with the welding portion (30) being hidden in the usage appearance region, **characterized in that** the welding method comprises:
step S111 of providing a first base member (11) composed of a light-transmitting substrate, wherein a surface of the first base member (11) has a first welding section (110) and a first treatment section (120);
step S112 of carrying out process treatment, preferably by means of integrated in-mold injection molding, on the first welding section (110) and the first treatment section (120) to provide a functional layer (12'), in particular the ink layer and/or the UV protective layer, so as to form a first prefabricated member (11') having a functional region (12) in the first welding section (110) and the first treatment section (120); and
step S113 of stripping the functional layer (12') from the first welding section (110), preferably by means of laser-etching removal with laser-etching laser (500), so as to form the first component (100) having the light-transmitting portion (10) in the first welding section (110); and/or
step S211 of providing a second base member (21) composed of a light-absorbing substrate, wherein a surface of the second base member (21) has a second welding section (210) and a second treatment section (220);
step S212 of carrying out anti-plating treatment on the second welding section (210), preferably coating with an anti-plating layer (22), so as to form a second prefabricated member (21') having an anti-plating region (22) in the second welding section (210); and
step S213 of electroplating the entirety of the second base member (21) such that the surface of the second base member (21) is coated with an electroplating layer (23) except for the second welding section (210) to form the second component (200) having the light-absorbing portion (20) in the second welding section (210).

2. The welding method as claimed in claim 1, **characterized in that** the welding method comprises:
step S101 of providing the first base member (11) composed of the light-transmitting substrate; and
step S102 of carrying out partial process treatment, preferably by means of partial integrated in-mold injection molding, on the first base member (11) to provide a functional layer (12'), in particular an ink layer and/or a UV protective layer, so as to form the first component (100) having the light-transmitting portion (10) in a part that is not provided with the functional layer (12'); and/or
step S201 of providing the second base member (21) composed of the light-absorbing substrate; and
step S202 of carrying out partial electroplating treatment on the second base member (21) to form the second component (200) having the light-absorbing portion (20) in a part that is not subjected to the electroplating treatment.

3. The welding method as claimed in any one of claims 1 to 2, **characterized in that**
the first welding section (110) is configured as a recess and has a depth (h1); and/or
the second welding section (210) is configured as a protrusion, preferably an L-shaped welding rib, and has a thickness (h2);
preferably, the depth (h1) is substantially consistent with the thickness (h2); and/or
preferably, in step S212, a side edge (210') of the second welding section (210) configured as the protrusion is also subjected to anti-plating treatment, preferably coated with the anti-plating layer (22).

4. The welding method as claimed in any one of claims 1 to 3, **characterized in that**
the area of the light-transmitting portion (10) is equal to the area of the light-absorbing portion (20), preferably, the area of the light-transmitting portion (10) is greater than the area of the light-absorbing portion (20); and/or
the first component (100) and the second component (200) are positioned abutting against each other under the action of a clamping force (F); and/or
a first front side (101) of the first component (100) is flush with a second front side (201) of the second component (200) to form an assembly front side (301) of the welded assembly (300), wherein the assembly front side (301) faces a user in the usage appearance region.

5. The welding method as claimed in any one of claims 2 to 4, **characterized in that**
the first base member (11) and/or the second base member (21) are made of a plastic material; and/or
the first base member (11) and/or the second base member (21) are integrally formed components; and/or
the first base member (11) is composed of a light-transmitting substrate that has high transmissivity, preferably complete transmission, to the welding laser (400); and/or
the second base member (21) is composed of a dark substrate, preferably a black substrate, which has high absorptivity, preferably complete absorption, for the welding laser (400);
preferably, the first base member (11) and the second base member (21) are made of different plastic materials, preferably plastic materials having similar melting points, for example, respectively made of ABS plastic and an acrylic material;
particularly preferably, the first base member (11) and the second base member (21) are made of the same plastic material, for example, made of ABS plastic or an acrylic material.

6. A welded assembly (300) for a household appliance (1000), wherein the welded assembly (300) comprises at least:
a first component (100) and a second component (200), and
a welding portion (30) between the first component (100) and the second component (200), the welded assembly (300) forming a usage appearance region of the household appliance (1000), with the welding portion (30) being hidden in the usage appearance region,
**characterized in that**
the welded assembly (300) is manufactured by means of the welding method as claimed in any one of claims 1 to 5.

7. The welded assembly (300) as claimed in claim 6, **characterized in that**
the welded assembly (300) has an assembly front side (301) facing a user in the usage appearance region, and the assembly front side (301) is composed of a first front side (101) of the first component (100) and a second front side (201) of the second component (200) which are flush with each other.

8. The welded assembly (300) as claimed in claim 6 or 7, **characterized in that**
in the assembly front side (301), a height difference (Δh) between the first front side (101) of the first component (100) and the second front side (201) of the second component (200) is at most 0.2 mm, preferably 0; and/or
in the assembly front side (301), a gap (Δd) between the first front side (101) of the first component (100) and the second front side (201) of the second component (200) is at most 0.3 mm, preferably 0.

9. An appearance member (900) for a household appliance (1000), **characterized in that** the appearance member (900) comprises a welded assembly (300) as claimed in any one of claims 6 to 8.

10. The appearance member (900) as claimed in claim 9, **characterized in that**
the appearance member (900) further comprises an electronic element that is arranged on an assembly back side (302) of the welded assembly (300) facing away from the user and is configured to control the household appliance (1000).

11. The appearance member (900) as claimed in claim 9 or 10, **characterized in that**
the appearance member (900) is a control panel (910); and/or
the appearance member (900) is a door ring (920) of a washing machine.

12. A household appliance (1000), **characterized by** comprising a welded assembly (300) as claimed in any one of claims 6 to 8 and/or an appearance member (900) as claimed in any one of claims 9 to 11.

13. The household appliance (1000) as claimed in claim 12, **characterized in that**
the household appliance (1000) is a water-guided household appliance.

14. The household appliance (1000) as claimed in claim 12 or 13, **characterized in that**
the household appliance (1000) is a washing machine, a dishwasher, or an electric coffee maker.

## Patentansprüche

1. Schweißverfahren für ein Haushaltsgerät (1000), das zumindest Folgendes umfasst:
Schritt S100: Bereitstellen einer ersten Komponente (100) mit einem lichtdurchlässigen Teil (10),
Schritt S200: Bereitstellen einer zweiten Komponente (200) mit einem lichtundurchlässigen Teil (20),
Schritt S300: derartiges Anordnen der ersten Komponente (100) und der zweiten Komponente (200) in Bezug zueinander, dass der lichtdurchlässige Teil (10) und der lichtundurchlässige Teil (20) einen Überlappungsbereich (50) aufweisen, und
Schritt S400: Richten eines Schweißlasers (400) auf den lichtundurchlässigen Teil (20) durch den lichtdurchlässigen Teil (10) in dem Überlappungsbereich (50) zwecks Bildens eines Schweißteils (30) zwischen dem lichtdurchlässigen Teil (10) und dem lichtundurchlässigen Teil (20), so dass die erste Komponente (100) und die zweite Komponente (200) zusammengeschweißt werden und so eine verschweißte Baugruppe (300) bilden, wobei die verschweißte Baugruppe (300) einen Gebrauchsoptikbereich des Haushaltsgeräts (1000) bildet und der Schweißteil (30) in dem Gebrauchsoptikbereich verborgen ist, **dadurch gekennzeichnet, dass** das Schweißverfahren Folgendes umfasst:
Schritt S111: Bereitstellen eines ersten Grundelements (11), das aus einem lichtdurchlässigen Substrat gebildet ist, wobei eine Oberfläche des ersten Grundelements (11) einen ersten Schweißabschnitt (110) und einen ersten Behandlungsabschnitt (120) aufweist,
Schritt S112: Durchführen einer Prozessbehandlung, vorzugsweise mithilfe von integriertem Hinterspritzen per Spritzguss, an dem ersten Schweißabschnitt (110) und dem ersten Behandlungsabschnitt (120) zum Bereitstellen einer Funktionsschicht (12'), insbesondere der Farbschicht und/oder der UV-Schutzschicht, zwecks Bildens eines ersten vorgefertigten Elements (11') mit einem Funktionsbereich (12) in dem ersten Schweißabschnitt (110) und dem ersten Behandlungsabschnitt (120), und
Schritt S113: Abziehen der Funktionsschicht (12') von dem ersten Schweißabschnitt (110), vorzugsweise mithilfe eines Entfernens durch Laserätzen mit einem Laserätzlaser (500), zwecks Bildens der ersten Komponente (100) mit dem lichtdurchlässigen Teil (10) in dem ersten Schweißabschnitt (110), und/oder
Schritt S211: Bereitstellen eines zweiten Grundelements (21), das aus einem lichtundurchlässigen Substrat gebildet ist, wobei eine Oberfläche des zweiten Grundelements (21) einen zweiten Schweißabschnitt (210) und einen zweiten Behandlungsabschnitt (220) aufweist,
Schritt S212: Durchführen einer Galvanisierschutzbehandlung an dem zweiten Schweißabschnitt (210), vorzugsweise Beschichten mit einer Galvanisierschutzschicht (22), zwecks Bildens eines zweiten vorgefertigten Elements (21') mit einem Galvanisierschutzbereich (22) in dem zweiten Schweißabschnitt (210), und
Schritt S213: Galvanisieren des gesamten zweiten Grundelements (21), so dass dessen Oberfläche außer an dem zweiten Schweißabschnitt (210) mit einer Galvanisierschicht (23) bedeckt ist, zwecks Bildens der zweiten Komponente (200) mit dem lichtundurchlässigen Teil (20) im zweiten Schweißabschnitt (210).

2. Schweißverfahren nach Anspruch 1, **dadurch gekennzeichnet, dass** das Schweißverfahren Folgendes umfasst:
Schritt S101: Bereitstellen des ersten Grundelements (11), das aus dem lichtdurchlässigen Substrat gebildet ist, und
Schritt S102: Durchführen einer teilweisen Prozessbehandlung, vorzugsweise mithilfe von integriertem teilweisem Hinterspritzen per Spritzguss, an dem ersten Grundelement (11) zum Bereitstellen einer Funktionsschicht (12'), insbesondere einer Farbschicht und/oder einer UV-Schutzschicht, zwecks Bildens der ersten Komponente (100) mit dem lichtdurchlässigen Teil (10) in einem Teilstück, das nicht mit der Funktionsschicht (12') versehen ist, und/oder
Schritt S201: Bereitstellen des zweiten Grundelements (21), das aus dem lichtundurchlässigen Substrat gebildet ist, und
Schritt S202: Durchführen einer teilweisen Galvanisierung an dem zweiten Grundelement (21) zwecks Bildens der zweiten Komponente (200) mit dem lichtundurchlässigen Teil (20) in einem Teilstück, das nicht galvanisiert wird.

3. Schweißverfahren nach einem der Ansprüche 1 bis 2, **dadurch gekennzeichnet, dass**:
der erste Schweißabschnitt (110) als Vertiefung ausgelegt ist und eine Tiefe (h1) aufweist und/oder
der zweite Schweißabschnitt (210) als Vorsprung, vorzugsweise als L-förmige Schweißrippe, ausgelegt ist und eine Dicke (h2) aufweist,
die Tiefe (h1) vorzugsweise im Wesentlichen mit der Dicke (h2) übereinstimmt und/oder
in Schritt S212 vorzugsweise ein Seitenrand (210') des zweiten Schweißabschnitts (210), der als Vorsprung ausgelegt ist, auch einer Behandlung zum Schutz vor einer Galvanisierung unterzogen, vorzugsweise mit der Galvanisierschutzschicht (22) beschichtet wird.

4. Schweißverfahren nach einem der Ansprüche 1 bis 3, **dadurch gekennzeichnet, dass**:
die Fläche des lichtdurchlässigen Teils (10) der Fläche des lichtundurchlässigen Teils (20) entspricht, wobei die Fläche des lichtdurchlässigen Teils (10) vorzugsweise größer ist als die Fläche des lichtundurchlässigen Teils (20), und/oder
die erste Komponente (100) und die zweite Komponente (200) unter Einwirkung einer Spannkraft (F) aneinander anliegend angeordnet werden und/oder
eine erste Vorderseite (101) der ersten Komponente (100) mit einer zweiten Vorderseite (201) der zweiten Komponente (200) zwecks Bildens einer Baugruppenvorderseite (301) der verschweißten Baugruppe (300) bündig abschließt, wobei die Baugruppenvorderseite (301) in dem Gebrauchsoptikbereich zu einem Benutzer weist.

5. Schweißverfahren nach einem der Ansprüche 2 bis 4, **dadurch gekennzeichnet, dass**:
das erste Grundelement (11) und/oder das zweite Grundelement (21) aus einem Kunststoffmaterial hergestellt ist und/oder
es sich bei dem ersten Grundelement (11) und/oder dem zweiten Grundelement (21) um einstückig gebildete Komponenten handelt und/oder
das erste Grundelement (11) aus einem lichtdurchlässigen Substrat mit einer hohen Durchlässigkeit, vorzugsweise vollständiger Durchlässigkeit, für den Schweißlaser (400) gebildet ist und/oder
das zweite Grundelement (21) aus einem dunklen Substrat, vorzugsweise einem schwarzen Substrat, mit hoher Absorptionsfähigkeit, vorzugsweise vollständiger Absorption, für den Schweißlaser (400) gebildet ist,
wobei das erste Grundelement (11) und das zweite Grundelement (21) vorzugsweise aus unterschiedlichem Kunststoffmaterial, vorzugsweise Kunststoffmaterial mit ähnlichem Schmelzpunkt, zum Beispiel aus ABS-Kunststoff beziehungsweise einem Acrylmaterial, hergestellt sind,
wobei das erste Grundelement (11) und das zweite Grundelement (21) besonders bevorzugt aus dem gleichen Kunststoffmaterial, zum Beispiel aus ABS-Kunststoff oder einem Acrylmaterial, hergestellt sind.

6. Verschweißte Baugruppe (300) für ein Haushaltsgerät (1000), wobei die verschweißte Baugruppe (300) zumindest Folgendes umfasst:
eine erste Komponente (100) und eine zweite Komponente (200) und
einen Schweißteil (30) zwischen der ersten Komponente (100) und der zweiten Komponente (200), wobei die verschweißte Baugruppe (300) einen Gebrauchsoptikbereich des Haushaltsgeräts (1000) bildet und der Schweißteil (30) in dem Gebrauchsoptikbereich verborgen ist,
**dadurch gekennzeichnet, dass**
die verschweißte Baugruppe (300) mithilfe des Schweißverfahrens nach einem der Ansprüche 1 bis 5 gefertigt ist.

7. Verschweißte Baugruppe (300) nach Anspruch 6, **dadurch gekennzeichnet, dass**:
die verschweißte Baugruppe (300) in dem Gebrauchsoptikbereich eine Baugruppenvorderseite (301) aufweist, die zu einem Benutzer weist, und die Baugruppenvorderseite (301) aus einer ersten Vorderseite (101) der ersten Komponente (100) und einer zweiten Vorderseite (201) der zweiten Komponente (200) gebildet ist, die bündig miteinander abschließen.

8. Verschweißte Baugruppe (300) nach Anspruch 6 oder 7, **dadurch gekennzeichnet, dass**:
bei der Baugruppenvorderseite (301) ein Höhenunterschied (Δh) zwischen der ersten Vorderseite (101) der ersten Komponente (100) und der zweiten Vorderseite (201) der zweiten Komponente (200) maximal 0,2 mm, vorzugsweise 0, beträgt, und/oder
bei der Baugruppenvorderseite (301) ein Spalt (Δd) zwischen der ersten Vorderseite (101) der ersten Komponente (100) und der zweiten Vorderseite (201) der zweiten Komponente (200) maximal 0,3 mm, vorzugsweise 0, beträgt.

9. Optikelement (900) für ein Haushaltsgerät (1000), **dadurch gekennzeichnet, dass**:
das Optikelement (900) eine verschweißte Baugruppe (300) nach einem der Ansprüche 6 bis 8 umfasst.

10. Optikelement (900) nach Anspruch 9, **dadurch gekennzeichnet, dass**:
das Optikelement (900) ferner ein elektronisches Element umfasst, das an einer Baugruppenrückseite (302) der verschweißten Baugruppe (300) angeordnet ist, die von dem Benutzer weg weist, und so ausgelegt ist, dass es das Haushaltsgerät (1000) steuert.

11. Optikelement (900) nach Anspruch 9 oder 10, **dadurch gekennzeichnet, dass**:
es sich bei dem Optikelement (900) um eine Bedienblende (910) handelt und/oder
es sich bei dem Optikelement (900) um einen Türring (920) einer Waschmaschine handelt.

12. Haushaltsgerät (1000), **dadurch gekennzeichnet, dass** es eine verschweißte Baugruppe (300) nach einem der Ansprüche 6 bis 8 und/oder ein Optikelement (900) nach einem der Ansprüche 9 bis 11 umfasst.

13. Haushaltsgerät (1000) nach Anspruch 12, **dadurch gekennzeichnet, dass** es sich bei dem Haushaltsgerät (1000) um ein wasserführendes Haushaltsgerät handelt.

14. Haushaltsgerät (1000) nach Anspruch 12 oder 13, **dadurch gekennzeichnet, dass**:
es sich bei dem Haushaltsgerät (1000) um eine Waschmaschine, einen Geschirrspüler oder eine elektrische Kaffeemaschine handelt.

## Revendications

1. Procédé de soudage pour un appareil électroménager (1000), comprenant au moins :
l'étape S100 consistant à fournir un premier composant (100) présentant une partie transmettant la lumière (10) ;
l'étape S200 consistant à fournir un second composant (200) présentant une partie absorbant la lumière (20) ;
l'étape S300 consistant à positionner le premier composant (100) et le second composant (200) l'un par rapport à l'autre de sorte que la partie transmettant la lumière (10) et la partie absorbant la lumière (20) présentent une région de chevauchement (50) ; et
l'étape S400 consistant à diriger un laser de soudage (400) sur la partie absorbant la lumière (20) à travers la partie transmettant la lumière (10) dans la région de chevauchement (50) afin de former une partie de soudage (30) entre la partie transmettant la lumière (10) et la partie absorbant la lumière (20), de sorte que le premier composant (100) et le second composant (200) soient soudés ensemble afin de former un ensemble soudé (300), dans lequel l'ensemble soudé (300) forme une région d'aspect d'utilisation de l'appareil électroménager (1000), la partie de soudage (30) étant cachée dans la région d'aspect d'utilisateur, **caractérisé en ce que** le procédé de soudage comprend :
l'étape S111 consistant à fournir un premier élément de base (11) composé du substrat transmettant la lumière, dans lequel une surface du premier élément de base (11) présente une première section de soudage (110) et une première section de traitement (120) ;
l'étape S112 consistant à réaliser un traitement, de préférence au moyen d'un moulage par injection en moule intégré, sur la première section de soudage (110) et la première section de traitement (120) afin de fournir une couche fonctionnelle (12'), en particulier la couche d'encre et/ou la couche de protection anti-UV, de façon à former un premier élément préfabriqué (11') présentant une région fonctionnelle (12) dans la première section de soudage (110) et la première section de traitement (120) ; et
l'étape S113 consistant à détacher la couche fonctionnelle (12') de la première section de soudage (110), de préférence au moyen d'un système de dépose par gravure au laser par un laser de gravure au laser (500), de façon à former le premier composant (100) présentant la partie transmettant la lumière (10) dans la première section de soudage (110) ; et/ou
l'étape S211 consistant à fournir un second élément de base (21) composé d'un substrat absorbant la lumière, dans lequel une surface du second élément de base (21) présente une seconde section de soudage (210) et une seconde section de traitement (220) ;
l'étape S212 consistant à réaliser un traitement anti-plaquage sur la seconde section de soudage (210), de préférence par un revêtement avec une couche anti-plaquage (22), de façon à former un second élément préfabriqué (21') présentant une région anti-plaquage (22) dans la seconde section de soudage (210) ; et
l'étape S213 consistant à électrodéposer la totalité du second élément de base (21) de sorte que la surface du second élément de base (21) soit revêtue d'une couche de galvanoplastie (23) excepté pour la seconde section de soudage (210) afin de former le second composant (200) présentant la partie d'absorption de la lumière (20) dans la seconde section de soudage (210).

2. Procédé de soudage selon la revendication 1, **caractérisé en ce que** le procédé de soudage comprend :
l'étape S101 consistant à fournir le premier élément de base (11) composé du substrat transmettant la lumière ; et
l'étape S102 consistant à réaliser un traitement partiel, de préférence au moyen d'un moulage par injection en moule intégré partiel, sur le premier élément de base (11) afin de fournir une couche fonctionnelle (12'), en particulier une couche d'encre et/ou une couche de protection anti-UV, de façon à former le premier composant (100) présentant la partie transmettant la lumière (10) dans une partie qui n'est pas dotée de la couche fonctionnelle (12') ; et/ou
l'étape S201 consistant à fournir le second élément de base (21) composé du substrat absorbant la lumière ; et
l'étape S202 consistant à réaliser un traitement de galvanoplastie partiel sur le second élément de base (21) afin de former le second composant (200) présentant la partie absorbant la lumière (20) dans une partie qui n'est pas soumise au traitement de galvanoplastie.

3. Procédé de soudage selon l'une quelconque des revendications 1 à 2, **caractérisé en ce que**
la première section de soudage (110) est configurée comme une cavité et présente une profondeur (h1) ; et/ou
la seconde section de soudage (210) est configurée comme une saillie, de préférence une nervure de soudage en forme de L, et présente une épaisseur (h2) ;
de préférence, la profondeur (h1) est sensiblement cohérente avec l'épaisseur (h2) ; et/ou
de préférence, dans l'étape S212, un bord latéral (210') de la seconde section de soudage (210) configurée comme la saillie est également soumis à un traitement anti-plaquage, de préférence revêtu par la couche anti-plaquage (22).

4. Procédé de soudage selon l'une quelconque des revendications 1 à 3, **caractérisé en ce que**
la superficie de la partie transmettant la lumière (10) est égale à la superficie de la partie absorbant la lumière (20), de préférence, la superficie de la partie transmettant la lumière (10) est supérieure à la superficie de la partie absorbant la lumière (20) ; et/ou
le premier composant (100) et le second composant (200) sont positionnés en butée l'un contre l'autre sous l'action d'une force de serrage (F) ; et/ou
un premier côté avant (101) du premier composant (100) est à ras d'un second côté avant (201) du second composant (200) afin de former un côté avant d'assemblage (301) de l'ensemble soudé (300), dans lequel le côté avant d'assemblage (301) fait face à un utilisateur dans la région d'aspect d'utilisation.

5. Procédé de soudage selon l'une quelconque des revendications 2 à 4, **caractérisé en ce que**
le premier élément de base (11) et/ou le second élément de base (21) sont réalisés en matière plastique ; et/ou
le premier élément de base (11) et/ou le second élément de base (21) sont des composants formés d'un seul tenant ; et/ou
le premier élément de base (11) est composé d'un substrat transmettant la lumière qui présente une transmissivité élevée, de préférence une transmission complète, au laser de soudage (400) ; et/ou
le second élément de base (21) est composé d'un substrat sombre, de préférence un substrat noir, qui présente une absorptivité élevée, de préférence une absorption complète pour le laser de soudage (400) ;
de préférence, le premier élément de base (11) et le second élément de base (21) sont réalisés en différentes matières plastiques, de préférence des matières plastiques présentant des points de fusion similaires, par exemple, ils sont respectivement constitués de plastique ABS et d'un matériau acrylique ;
de manière particulièrement préférée, le premier élément de base (11) et le second élément de base (21) sont réalisés dans la même matière plastique, par exemple, ils sont constitués de plastique ABS ou d'un matériau acrylique.

6. Ensemble soudé (300) pour un appareil électroménager (1000), dans lequel l'ensemble soudé (300) comprend au moins :
un premier composant (100) et un second composant (200) ; et
une partie de soudage (30) entre le premier composant (100) et le second composant (200), l'ensemble soudé (300) formant une région d'aspect d'utilisation de l'appareil électroménager (1000), la partie de soudage (30) étant cachée dans la région d'aspect d'utilisation
**caractérisé en ce que** l'ensemble soudé (300) est fabriqué par le biais d'un procédé de soudage selon l'une quelconque des revendications 1 à 5.

7. Ensemble soudé (300) selon la revendication 6, **caractérisé en ce que**
l'ensemble soudé (300) présente un côté avant d'assemblage (301) faisant face à un utilisateur dans la zone d'aspect d'utilisation, et le côté avant d'assemblage (301) est composé d'un premier côté avant (101) du premier composant (100) et d'un second côté avant (201) du second composant (200) qui sont à ras l'un de l'autre.

8. Ensemble soudé (300) selon la revendication 6 ou 7, **caractérisé en ce que**
dans le côté avant d'assemblage (301), une différence de hauteur (Δh) entre le premier côté avant (101) du premier composant (100) et le second côté avant (201) du second composant (200) est au plus de 0,2 mm, de préférence de 0 ; et/ou
dans le côté avant d'assemblage (301), un intervalle (Δd) entre le premier côté avant (101) du premier composant (100) et le second côté avant (201) du second composant (200) est au plus de 0,3 mm, de préférence de 0.

9. Élément d'aspect (900) pour un appareil électroménager (1000), **caractérisé en ce que** l'élément d'aspect (900) comprend un ensemble soudé (300) selon l'une quelconque des revendications 6 à 8.

10. Élément d'aspect (900) selon la revendication 9, **caractérisé en ce que**
l'élément d'aspect (900) comprend en outre un élément électronique qui est agencé sur un côté arrière d'assemblage (302) de l'ensemble soudé (300) orienté à l'opposé de l'utilisateur et est configuré afin de commander l'appareil électroménager (1000).

11. Élément d'aspect (900) selon la revendication 9 ou 10, **caractérisé en ce que**
l'élément d'aspect (900) est un panneau de commande (910) ; et/ou
l'élément d'aspect (900) est un joint de porte (920) d'une machine à laver.

12. Appareil électroménager (1000), **caractérisé en ce qu'**il comprend un ensemble soudé (300) selon l'une quelconque des revendications 6 à 8, et/ou un élément d'aspect (900) selon l'une quelconque des revendications 9 à 11.

13. Appareil électroménager (1000), selon la revendication 12, **caractérisé en ce que** l'appareil électroménager (1000) est un appareil électroménager guidé par l'eau.

14. Appareil électroménager (1000), selon la revendication 12 ou 13, **caractérisé en ce que** l'appareil électroménager (1000) est une machine à laver, un lave-vaisselle ou une cafetière électrique.
